(19) **Europäisches Patentamt**
**European Patent Office**
**Office européen des brevets**

(11) **EP 3 304 989 B1**

(12) **EUROPEAN PATENT SPECIFICATION**

(45) Date of publication and mention
of the grant of the patent:
**30.03.2022 Bulletin 2022/13**

(21) Application number: **15730852.9**

(22) Date of filing: **27.05.2015**

(51) International Patent Classification (IPC):
***H04W 72/04*** *(2009.01)*

(52) Cooperative Patent Classification (CPC):
**H04W 72/0493;** H04W 72/0486

(86) International application number:
**PCT/IB2015/053943**

(87) International publication number:
**WO 2016/189353 (01.12.2016 Gazette 2016/48)**

(54) **SYSTEMS AND METHODS FOR RADIO RESOURCE ALLOCATION ACROSS MULTIPLE RESOURCE DIMENSIONS**

SYSTEME UND VERFAHREN ZUR FUNKRESSOURCENZUWEISUNG ÜBER MEHRERE RESSOURCENDIMENSIONEN

SYSTÈMES ET PROCÉDÉS POUR UNE AFFECTATION DE RESSOURCES RADIO SUR DE MULTIPLES DIMENSIONS DE RESSOURCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.04.2018 Bulletin 2018/15**

(73) Proprietor: **Telefonaktiebolaget LM Ericsson (publ)**
**164 83 Stockholm (SE)**

(72) Inventors:
• **HALABIAN, Hassan**
**Ottawa, Ontario K2W 0A5 (CA)**

• **SCHMIDT, Alfred**
**Kanata, Ontario K2T 1C8 (CA)**
• **SMITH, Roland**
**Nepean, Ontario K2J 0E1 (CA)**

(74) Representative: **Zacco Sweden AB**
**Valhallavägen 117**
**Box 5581**
**114 85 Stockholm (SE)**

(56) References cited:
**EP-A1- 2 472 981       WO-A1-2013/096563**
**US-A1- 2014 036 893**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present disclosure relates to radio resource allocation in a wireless communications network.

Background

In a wireless communications network, transmitting entities use radio resources to transmit their information to receiving entities. A radio resource is any consumable resource used for the purpose of transmission. Some of the radio resources are local resources and some are network-wide resources which are shared among users of the network or other co-sited networks. Such resources are referred to as shared radio resources. Examples of such resources include channel-time, radio spectrum, power, etc. Appropriate allocation of radio resources affects the performance of the whole network in different aspects, e.g., throughput region, battery lifetime, fairness, etc. Appropriate allocation of radio resources is especially important when considering resource allocation in noisy environments with interfering transmissions from different users who are also sharing the same network media.

Radio resource allocation in radio access technology has been mostly focused on the case of cellular access networks where the goal is to allocate existing spectrum/time resources (e.g., resource blocks in Long Term Evolution (LTE) wireless communications networks) to the users such that some performance attributes are satisfied. Throughput per user is an example of a performance attribute that is managed using radio resource allocation in cellular access networks. An example objective of the radio resource allocation is proportional fairness whereby the base station attempts to schedule the users of a cell such that the throughput per user is proportional to the radio link quality of the user relative to other users of the cell. Note that in cellular access networks, the radio resources of a cell are usually allocated centrally by a single controller. In other words, a central controller (usually the base station) allocates the radio resources for each time frame of transmission of a given cell. While radio resource allocation in cellular access technology is well defined and well-understood, it has not been investigated thus far for random access based radio access technologies including Wireless Local Area Networks (WLANs) and multi-Radio Access Technology (RAT) networks. These networks typically operate in unlicensed spectrum where the radio frequency channel of operation is considered a shared resource. While algorithms exist at the radio level to attempt to enable sharing behaviors such as airtime fairness algorithms, cross radio network level algorithms which tackle the specifics of monitoring, and controlling resource allocation have not been considered, or addressed with current technology. As such, there is a need for systems and methods for radio resource allocation to address the case where the radio resource is shared.

Document US 2014/036893 A1 may be construed to disclose a method and network device for enforcing uplink airtime fairness in wireless local area networks. The network device receives usage limits associated with transmissions from one or more client devices. The client devices transmit packets to the network device via one or more uplink wireless mediums. The disclosed network device further collects wireless medium usage times associated with the client devices, and calculates a size for transmission windows corresponding to the client devices based on the wireless medium usage times and the usage limits. The transmission windows can be TCP advertisement windows whose size determines a rate of transmissions permitted over the wireless medium. Then, the disclosed network device sets the transmission window to the calculated size.

Document WO 2013/096563 A1 may be construed to disclose systems and methods generally related to the creation of a spectrum allocator (SA) function that can be used to dynamically assign/reassign the frequency of operation of a node operating in a wireless communication network. To permit LTE operation in license exempt (LE) bands, the radio resource management (RRM) system is enhanced to include an interface, which allows it to communicate with modules external to the RRM.

Document EP 2 472 981 A1 may be construed to disclose resource management techniques and a method and apparatus for scheduling of a transmission radio link in time and frequency domain. It helps to improve spectral efficiency by a dynamic and fast resource allocation, taking into account the instantaneous link quality information, the instantaneous packet arrival data rate, spatial multiplexing possibility, QoS requirements, and special handling of retransmissions.

Summary

According to the disclosure, there are provided a method, a computer-readable medium and an apparatus according to the independent claims. Developments are set forth in the dependent claims.

Those skilled in the art will appreciate the scope of the present disclosure and realize additional aspects thereof after reading the following detailed description of the embodiments in association with the accompanying drawing figures.

Brief Description of the Drawings

The accompanying drawing figures incorporated in and forming a part of this specification illustrate several aspects of the disclosure, and together with the description serve to explain the principles of the disclosure.

Figure 1 is a diagram of a wireless communications network according to some embodiments of the present disclosure;

Figure 2 is a flow chart illustrating a process for allocating radio resources across multiple resource dimensions according to some embodiments of the present disclosure;

Figure 3 is a flow chart illustrating a process for allocating radio resources by allocating and deducting credits according to some embodiments of the present disclosure;

Figure 4 is a diagram of a wireless communications network including an aggregate point according to some embodiments of the present disclosure;

Figure 5 is a diagram of a wireless communications network including multiple Radio Access Technologies (RATs) according to some embodiments of the present disclosure;

Figure 6A is a flow chart illustrating a process for obtaining radio resource usage at an aggregate point according to some embodiments of the present disclosure;

Figure 6B is a flow chart illustrating a process for obtaining radio resource usage at a wireless access point operating in promiscuous mode according to some embodiments of the present disclosure;

Figure 7A is a diagram of a wireless access point for a Wireless Local Access Network (WLAN) wireless communications network with traffic partition queues and scheduler separate from the Media Access Control (MAC) and Physical (PHY) layer according to some embodiments of the present disclosure;

Figure 7B is a diagram of a wireless access point for a WLAN wireless communications network with traffic partition queues and scheduler included with the MAC and PHY layer according to some embodiments of the present disclosure;

Figure 8 is a diagram of a network node according to some embodiments of the present disclosure;

Figure 9 is a diagram of a wireless device according to some embodiments of the present disclosure; and

Figure 10 is a diagram of a network node according to some embodiments of the present disclosure.

Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

While the present disclosure is applicable to many types of wireless communications networks, most of the examples focus on Wireless Local Area Networks (WLANs). A WLAN is a wireless access technology which is considered very prone to interference and noise. In WLANs operating on the same frequency channel, the medium (channel-time) is shared among all the transmitting entities. Thus there needs to be a Medium Access Control (MAC) to manage the access of the Access Points (APs) referred to herein as wireless access points; and Stations (STAs) (referred to herein as wireless devices) to the medium. WLANs are using Institute of Electrical and Electronics Engineers (IEEE) 802.11 standard series to control the medium access. A Basic Service Set (BSS) is considered to be the basic building block of a WLAN as defined in the IEEE 802.11 standards. In an infrastructure mode WLAN, a BSS consists of an AP with a unique MAC address and the clients (non-AP stations in WLAN) associated and connected to it. A BSS is uniquely identified by a Basic Service Set Identifier (BSSID) which is the MAC address of the AP in the BSS. An Extended Service Set (ESS), however, is a set of interconnected BSSs. In an ESS, BSSs are connected through the distribution system. A distribution system (DS) connects access points in an extended service set. A WLAN deployment consists of one or more ESSs.

The fast emergence of new wireless access technologies with various supported rates and features makes it difficult to ensure that a system is compatible with desired system requirements. Bandwidth policing is part of the system functionalities required to provide desired levels of service in wireless access technologies over different traffic partitions.

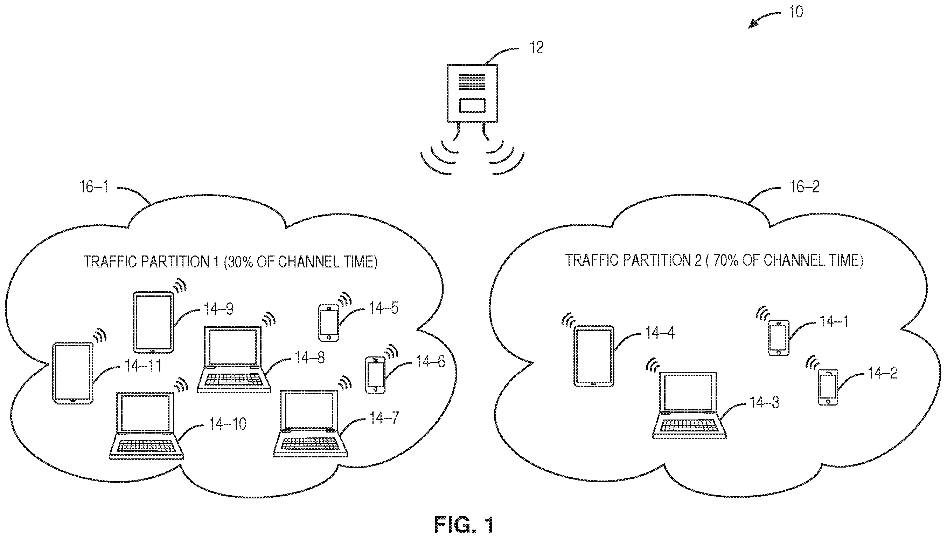

Figure 1 is a diagram of a wireless communications network 10 according to some embodiments of the present disclosure. Figure 1 shows a single wireless access point 12. Wireless access point 12 is currently serving wireless devices 14-1 through 14-11. In this embodiment, two traffic partitions are defined, traffic partition 16-1 and traffic partition 16-2. Wireless devices 14-5 through 14-11 belong to traffic partition 16-1 while wireless devices 14-1 through 14-4 belong to traffic partition 16-2. Note that defining a traffic partition based on the member wireless devices 14 is only one example for how a traffic partition can be defined. For example, a traffic partition can be defined to include transmissions conforming to a specific characteristic. In some embodiments, a traffic partition is defined to include transmissions with a similar Quality of Service (QoS), transmissions using a predetermined service (e.g., BitTorrent), transmissions to/from a predetermined destination (e.g., YouTube.com), or any combination of these features.

Figure 1 also shows that channel time is the radio resource to be allocated in this example, and the radio resource allocation policy for the traffic partitions is that 30% of the channel time should be allocated to traffic partition 16-1 and 70% of the channel time should be allocated to traffic partition 16-2. For instance, such a set of policies may be used when wireless access point 12 provides two separate connections where the connection associated with traffic partition 16-1 is a publicly accessible connection, whereas the connection associated with traffic partition 16-2 is a private connection. This type of radio resource allocation policy can be considered a type of bandwidth policing. Bandwidth policing strategies in wireless access technologies can be classified as follows:

Bandwidth policing is mostly defined as incoming traffic rate control into the APs/base stations from the core network towards the radio medium. However, bandwidth policing can be considered to cover more dimensions of wireless communication, i.e., policing the channel-time, controlling the radio spectrum, scheduling of the incoming packets, control of Multi-User-Multiple Input Multiple Output (MU-MIMO) transmissions, etc.

Bandwidth policing can be used for both Uplink (UL) and Downlink (DL) traffic. There may be different strategies for policing the UL and DL traffic, or there may be a unified strategy for both UL and DL.

Bandwidth policing can be placed at the radio level (e.g., at AP in WLANs or a base station in cellular networks) or at an aggregate point level (e.g., a Wireless Access Controller in WLANs). By placing it at the radio level, this creates the opportunity to use the immediate information at the radio level in the bandwidth policing decisions. By performing the bandwidth policing at the aggregate point level, traffic may be throttled or shaped at the aggregate point (ingress and egress points) to avoid congesting the APs/base stations.

Bandwidth policing can be placed at the STA level or at the STA group level (e.g., SSID level in WLANs). In the STA level bandwidth policing, the traffic (UL and DL) of each individual STA can be policed according to some predefined service profiles. Traffic policing can also be placed at the STA group level where a group of STAs are treated according to the same service profile.

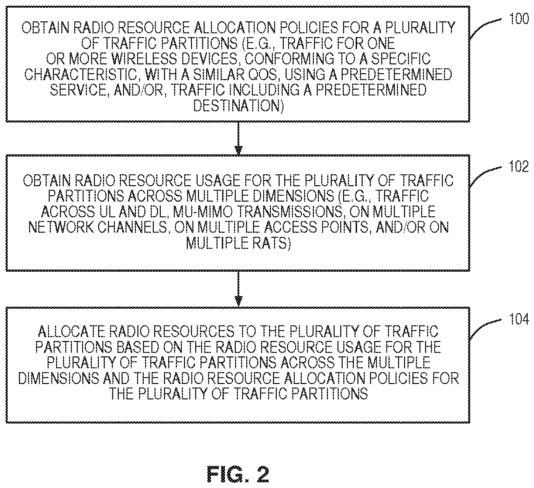

Figure 2 is a flow chart illustrating a process for allocating radio resources across multiple resource dimensions according to some embodiments of the present disclosure. The network node, here located within a wireless access point 12, obtains radio resource allocation policies for two or more traffic partitions 16 (e.g., traffic for one or more wireless devices, conforming to a specific characteristic, with a similar QoS, using a predetermined service, and/or, traffic including a predetermined destination) (step 100). The network node 12 then obtains radio resource usage for the two or more traffic partitions 16 across multiple resource dimensions (e.g., traffic across UL and DL, MU-MIMO transmissions, on multiple Radio Frequency (RF) channels, on multiple access points, and/or on multiple RATs) (step 102). Then, the network node 12 allocates radio resources to the two or more traffic partitions 16 based on the radio resource usage for the two or more traffic partitions 16 across the multiple resource dimensions and the radio resource allocation policies for the two or more traffic partitions 16 (step 104).

Allocating radio resources based on the usage across multiple resource dimensions allows for a greater control of the actual usage of the radio resources and a greater ability to enforce the radio resource allocation policies, according to some embodiments. In this regard, various dimensions of the transmission media may be controlled/involved in the resource control procedure. The different dimensions considered may include channel-time, radio frequency spectrum, spatial usage of the media, capability of concurrent spatial transmissions (MU-MIMO), multi-channel transmissions, cross-RAT transmissions (unlicensed Long Term Evolution (LTE), Wi-Fi™, etc.), and combined uplink and downlink resources. One possible goal would be to control the level of service (which can be defined by a network administrator for example) to different traffic partitions defined in the network by controlling the access of different users to the radio resources (channel-time and frequency spectrum) in a network capable of MU-MIMO technology and multi-RAT transmissions and all over the volume usage of the network. Z The Z radio resource allocation policies are Z defined per traffic partition over the geographical area of a multi-RAT network.

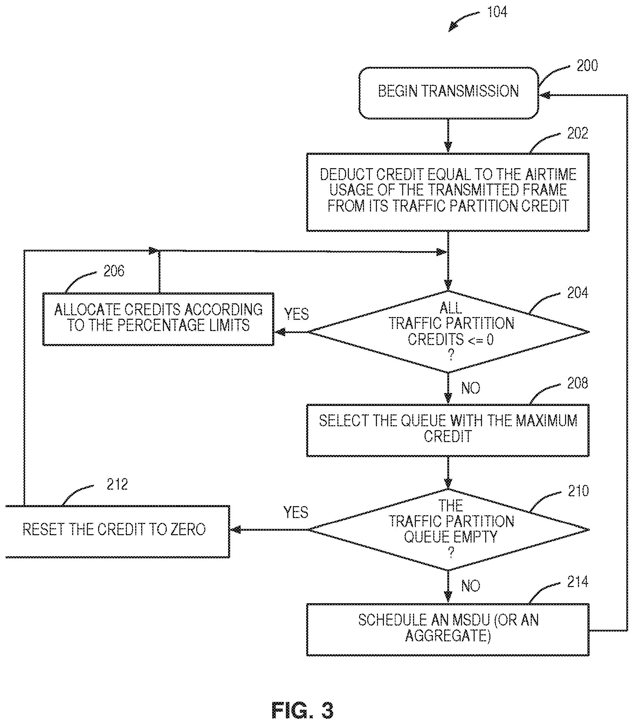

As one method of implementing the radio resource allocation of step 104, Figure 3 is a flow chart illustrating a process for allocating radio resources by allocating and deducting credits according to some embodiments of the present disclosure. Again, this example uses WLAN terminology although the concepts disclosed are not limited thereto. In this example, channel-time resource control in a WLAN is accomplished by a dynamic packet scheduling algorithm over traffic partitions (virtual APs) queued up in the physical AP. As will be discussed in more detail below, the queues may be formed above the MAC layer or in the MAC layer according to different embodiments. Each queue is keeping the MAC Service Data Unit (MSDU) arrivals for each traffic partition. The algorithm keeps separate credit buckets for each queue. In this example, these credit buckets are keeping channel time credit for each queue, but the buckets can be configured to count credits in other ways depending on which radio resource is being allocated and the radio resource allocation policies. Each time a frame is transmitted (step 200), the time usage for the transmission is calculated and this amount is deducted from the credit bucket of the traffic partition to which this frame is associated (step 202). The transmission time includes the time the frame is on the air, the time for an Acknowledgement (ACK) transmission, one Distributed Inter-Frame Space (DIFS) and/or one Short Inter-Frame Space (SIFS) according to this example. If the frame transmission fails, the total time used by the frame until a notification is received saying either the frame was received or the frame failed after reaching the maximum retransmission limit may be counted. In both cases, the total time usage is kept and deducted from the credit bucket. In the case of frame aggregation, depending on the type of aggregation, it may be necessary to count deductions for DIFS, SIFS, Block ACK Request and Block ACK.

Each time a frame is transmitted (either successfully or failed after reaching the maximum retransmission limit) and the credit deducted from the credit buckets, the traffic partition credits are checked to determine if all of them are equal to or less than zero (step 204). If so, the wireless access point 12 allocates credits according to the percentage limits included in the radio resource allocation policies (step 206). For example, there may be a fixed Base Time Credit (BTC), e.g., 100ms and the credits will be allocated according to the BTC as well as the percentage limit of each traffic partition:

$$Partition\_Credit_i = P_i \times BTC$$

where $P_i$ is the percentage limit of traffic partition i. For example, the radio resource allocation policies shown in Figure 1 indicate that 30% of the channel time should be allocated to the traffic partition 16-1 and 70% to the traffic partition 16-2. Using a BTC of 100ms, the credit buckets will be 30ms for the traffic partition 16-1 and 70ms for the traffic partition 16-2.

Returning to Figure 3, if at least one traffic partition still has a positive credit, the queue with the maximum credit is selected (step 208). An alternative for the scheduler is to just use a Round Robin scheduler modified to only serve a queue if its credit is positive. A Round Robin approach will reduce the scheduling complexity as there is no need to perform a sort for each packet scheduling. If the selected traffic partition queue is empty (step 210) but it has positive credit, the credit is reset to zero (step 212). This allows other traffic partition queues to be selected instead of potentially wasting radio resources on a traffic partition that has no transmissions to make. If the traffic partition queue is not empty, the wireless access point 12 schedules an MSDU for transmission or perhaps schedules an aggregate transmission, depending on the capabilities of the wireless communications network (step 214). This process may be repeated for each transmission and as many times as necessary.

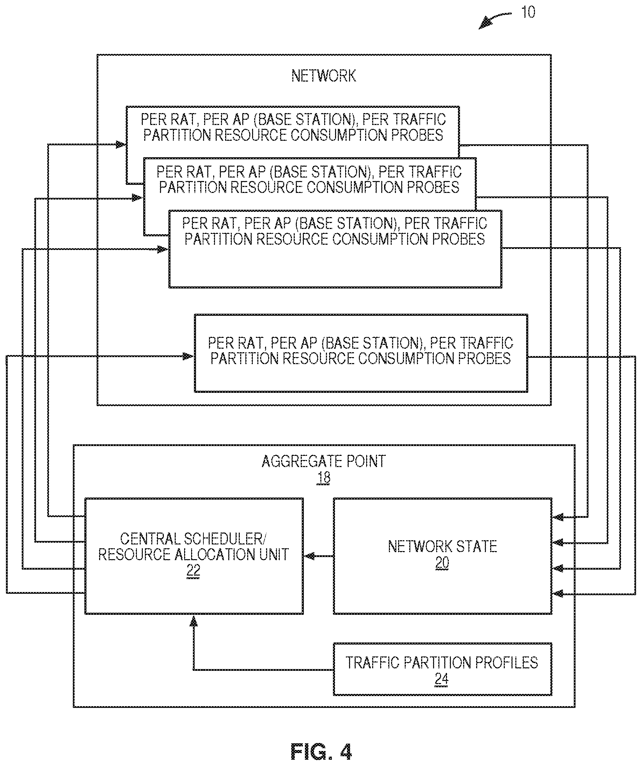

In order to account for the radio resource usage across the multiple resource dimensions, the credit buckets need to be updated for radio resource usage in each of the multiple resource dimensions. One way to acquire these usage statistics is shown in Figure 4, which is a diagram of a wireless communications network 10 including an aggregate point 18 according to some embodiments of the present disclosure. The system proposed for such a multidimensional resource control is composed of probes that log the consumption of each individual radio resource per AP/base station in each Radio Access Technology (RAT) and per traffic partition during a control time slot. The usage statistics are passed to a network state module 20 inside the aggregate point 18 which acts as a network gateway for incoming packets and also a central network control unit according to some embodiments. A central scheduler/resource allocation unit 22 will take several dimensions of the network operation into consideration as acquired by the network state module 20 in order to perform an appropriate action for packet/resource scheduling into the network. In this embodiment, the central scheduler/resource allocation unit 22 has access to the radio resource allocation policies stored in the traffic partition profiles module 24.

The aggregate point 18 may operate as in the methods described in Figures 2 and 3 or in any other suitable way. As illustrated, the probes enable policing of the channel-time over multiple traffic partitions in both UL and DL over multiple traffic partitions according to the radio resource allocation policies. This solution may also consider channel-time allocation all over the network volume and frequency spectrum (in the case of existence of multi-channel WLAN users) and for the case of MU-MIMO transmissions in the network. Probes may also be used to determine radio resource usage in other RATs which may be beneficial when the different RATs are operated by the same network provider, for example. This is in contrast to the notion of air-time fairness where the channel time is allocated equally in the DL to the clients of a single physical AP. By treating channel time as a network wide resource, this enables providing uniform service to the whole network. This enhances the overall network performance in terms of channel-time utilization efficiency and throughput according to some embodiments.

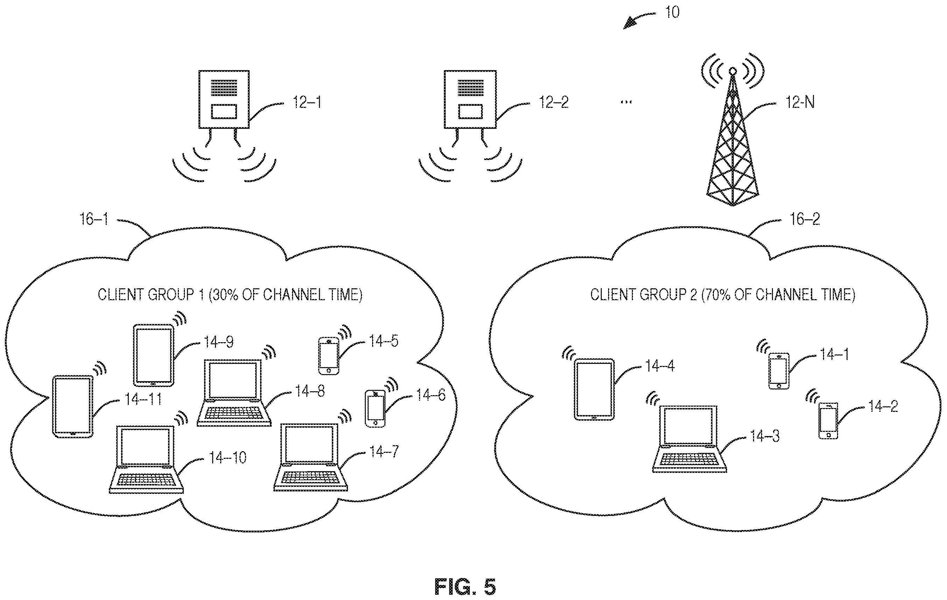

Figure 5 is a diagram of a wireless communications network 10 including multiple RATs according to some embodiments of the present disclosure. This is very similar to the wireless communications network 10 shown in Figure 1 except that there is more than one wireless access point 12. Specifically, Figure 5 shows wireless access points 12-1 and 12-2 that are WLAN APs and a wireless access point 12-N that is for a different RAT such as an LTE network.

The process discussed in Figures 2 and 3 can be extended to cover these situations and others by controlling the streams of packets of different traffic partitions into the MAC and physical (PHY) layers of 802.11 in the wireless access points 12, for example. This may control the DL flow from the wireless access points 12 to the wireless devices 14. To consider the UL channel time usage of the wireless devices 14, the UL channel time usage of the wireless devices 14 should be deducted from the credit buckets. Therefore, the credit deduction step 202 will change as follows: each time a frame is transmitted (in both UL and DL), the time usage is calculated and deducted from the traffic partition to which this frame is associated.

The method can be extended for clustered APs (such as wireless access points 12-1 and 12-2) which are working on the same WLAN channel and serving the same set of traffic partitions (the same configured traffic partitions). The following possible embodiments can be used to control the channel time allocations in a cluster of APs. As shown in Figure 4, an aggregate point 18 can be used such as a WLAN Controller. To achieve this goal, the credit usage can be counted locally at each wireless access point 12 and then reported periodically to the aggregate point 18. At the end of each reporting period, the aggregate point 18 allocates new credits as discussed previously. To deal with the delay between wireless access points 12 and the aggregate point 18, the aggregate point 18 may need to allocate credits before they run out at the wireless access points 12. The wireless access points 12 can also report their remaining credits, and the aggregate point 18 allocates new credits once the aggregate outstanding credits fall below a positive threshold. This threshold is chosen so that the wireless access points 12 do not run out during the round trip time of the wireless access points 12 sending reports and the aggregate point 18 sending out grants.

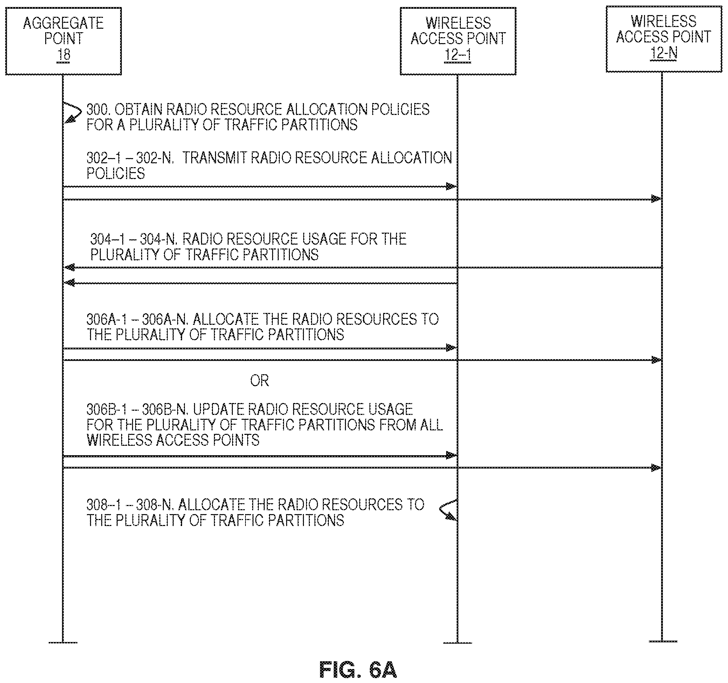

Figure 6A is a flow chart illustrating a process for obtaining radio resource usage at an aggregate point 18 according to some embodiments of the present disclosure. First, an aggregate point 18 obtains radio resource allocation policies for two or more traffic partitions (step 300). The aggregate point 18 then transmits the radio resource allocation policies to the wireless access points 12-1 through 12-N (steps 302-1 through 302-N). This transmission may include the actual policies or a current credit allocation depending on the implementation. Next, the wireless access points 12-1 through 12-N send radio resource usage for the two or more traffic partitions (steps 304-1 through 304-N). In some embodiments, the aggregate point 18 may then allocate the radio resources to the two or more traffic partitions directly (steps 306A-1 through 306A-N). In some other embodiments, the aggregate point 18 may update the radio resource usage for the two or more traffic partitions from all of the wireless access points 12 (steps 306B-1 through 306B-N). This may allow the wireless access points 12 to make scheduling decisions based on the usage across all of the wireless access points 12-1 through 12-N. Next, the wireless access points 12-1 through 12-N may allocate the radio resources to the two or more traffic partitions (steps 308-1 through 308-N).

Alternatively, or in addition to using the aggregate point 18, if the wireless access points 12 form a dense cluster, another option may become available. It is well known in the industry that Wi-F™i radios may be operated in a "promiscuous" mode - that is, a mode in which the devices are capable of receiving all Wi-Fi™ packets transmitted on a channel regardless if they are intended for the Wi-Fi™ radio. Promiscuous mode is often used by Wi-Fi™ radio applications such as "Omnipeek" as an OTA - "over the air" packet sniffer - similar to the "Wireshark" application which is used to monitor Ethernet traffic over a wired connection. By setting a wireless access point 12 to operate in promiscuous mode, that wireless access point 12 is aware of the transmissions initiated by the other wireless access points 12 in the cluster. When that wireless access point 12 detects a packet transmission from other wireless access points 12, it deducts the channel time usage of the transmission from the credit bucket of the traffic partition it is associated with. In some embodiments, more than one or even all of the wireless access points 12 will be operating in promiscuous mode. Moreover, as radio access technologies evolve, the ability of the wireless access point to monitor not only 802.11 Wi-Fi™ packets, but also alternate wireless protocols such as Bluetooth™, ZigBee™, IPv6 over Low power Wireless Personal Area Networks (6LoWPAN), License Assisted Access LTE (LAA-LTE), LTE-Unlicensed (LTE-U), Digital Enhanced Cordless Telecommunication (DECT), and others as they may operate in the same shared spectrum; therefore consuming radio resources while transmitting and receiving data.

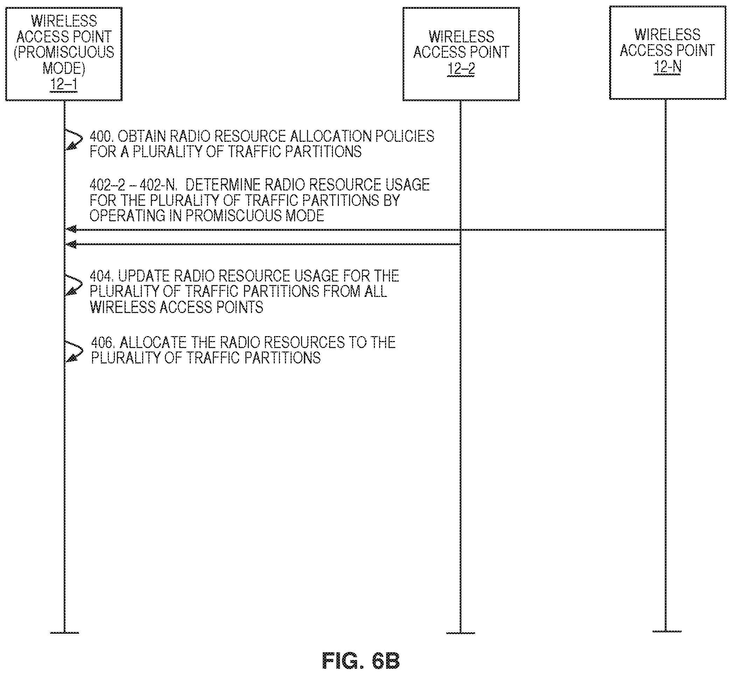

When a queue becomes empty in a wireless access point 12, it broadcasts its status to the other wireless access points 12. If a queue becomes empty in all the wireless access points 12 in the cluster, they all reset the credit bucket for that traffic partition. This broadcasting process could be performed over the distribution system (backhaul link) to the wireless access points 12 in the cluster to avoid wasting available air time. Figure 6B is a flow chart illustrating a process for obtaining radio resource usage at a wireless access point 12 operating in promiscuous mode according to some embodiments of the present disclosure. In this example, only wireless access point 12-1 is shown as operating in promiscuous mode, but the current disclosure is not limited thereto. Wireless access point 12-1 obtains radio resource allocation policies for one or more traffic patterns (step 400). Then, wireless access point 12-1, by operating in promiscuous mode, determines radio resource usage for the two or more traffic partitions (steps 402-2 through 402-N). Wireless access point 12-1 updates radio resource usage for the two or more traffic partitions from all wireless access points 12 (step 404). The wireless access point 12-1 then allocates the radio resources to the two or more traffic partitions (step 406).

By performing the solutions in disclosed in Figure 6A or Figure 6B, the credit buckets in all of the wireless access points 12 will evolve equally in time. Note that in this case since the buckets are shared among all of the wireless access points 12, a larger BTC value may need to be chosen.

An idea similar to the one used for clustered wireless access points 12 can also be used for multi-channel transmissions. Separate credit buckets are kept for each non-overlapping channel. When any channel is used (either as the primary or the secondary), the credit is deducted and a credit deduction report is sent to the aggregate point 18 or accounted for by a wireless access point 12 operating in promiscuous mode. A function (e.g., a sum) of the credit deductions on all the channels can be used for managing the credit increase phase and packet scheduling.

MU-MIMO is considered a new advanced MIMO technology in the new generation of wireless access technology. In WLAN networks, a wireless access point 12 broadcasts each of its transmissions over the air interface, making WLAN channel blocked for other transmissions. Therefore, at each time, only one frame can be transmitted on the air. In MU-MIMO, by using explicit channel feedback and beam-forming, a wireless access point 12 can transmit multiple frames to different WLAN wireless devices 14. This is done by using an appropriate pre-coding matrix at the transmitter. Since in MU-MIMO multiple frame transmissions are possible, the channel time usages of different traffic partitions may overlap. To apply the channel-time control scheme in wireless access points 12 equipped with MU-MIMO, different approaches may be considered.

First, the total channel time usages of all the traffic partitions should follow the percentage limits. In this case, when a MU-MIMO transmission is done, the total channel time spent is deducted from the credit buckets of all the traffic partitions involved in the MU-MIMO transmission. For example, if the MU-MIMO transmission consists of two frames associated to two different traffic partitions, the channel time usage will be deducted from both credit buckets. Since in this approach the accumulated time usages are more than the BTC value, credit increase epochs may be visited quite regularly. Moreover, this approach may not work fairly since MU-MIMO is an opportunity for wireless devices 14 located in good positions to use the channel concurrently and improve the whole system throughput. Decreasing the credits of all the involved traffic partitions by the total channel time usage may be considered unfair.

An alternative approach is the following: When a MU-MIMO transmission is done, the total channel time usage will be split according to some rules. An example could be to split it equally among the involved traffic partitions. Another approach is to split it according to the percentage limits of the involved traffic partitions, i.e.,

$$Partition\_Credit\_Deduction_i$$

$$= \frac{P_i}{\sum_{all\ the\ involved\ traffic\ partitions} P_j} \times (MU\_MIMO\ Channel\ time\ usage)$$

In other words, it is assumed that at the times at which the channel was occupied by more than one traffic partition, the channel time usage of each traffic partition is equal to a fraction of the total channel time usage in MU-MIMO transmissions.

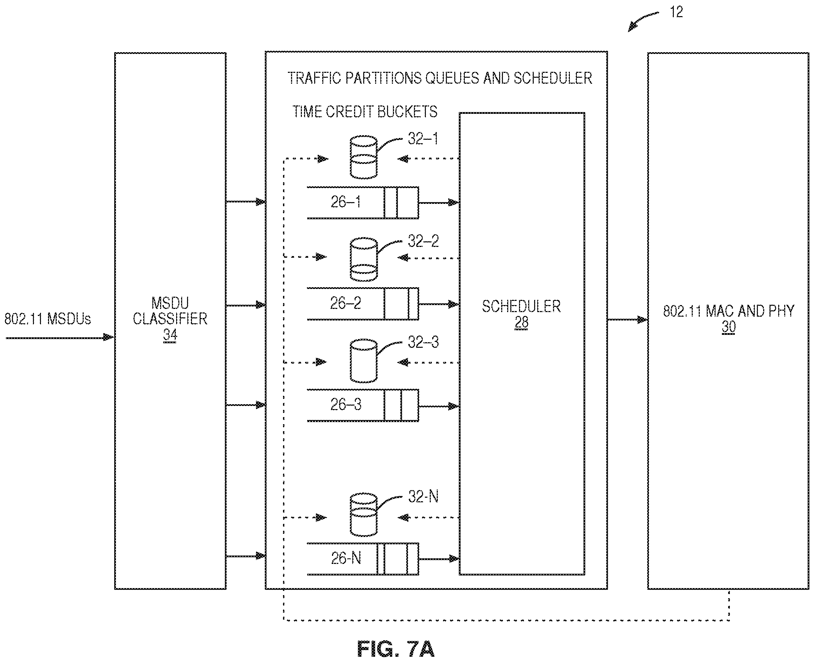

As discussed above, the location of the scheduler and the traffic partition queues can be inside the MAC layer or they may be located on top of the upper MAC layer. The location where the methods are implemented may affect the speed of convergence of the algorithm. As the distance of the algorithm from the PHY layer increases, the speed of convergence of the algorithm decreases and more ripples (variations) will be observed in channel time allocation over different traffic partitions. Figure 7A is a diagram of a wireless access point 12 for a WLAN with traffic partition queues 26-1 through 26-N and scheduler 28 separate from the MAC and PHY layer 30 according to some embodiments of the present disclosure. Figure 7A also shows the time credit buckets 32-1 through 32-N corresponding to the two or more traffic partitions. Also, MSDU classifier 34 receives incoming IEEE 802.11 MDSUs in this embodiment and determines which one of the two or more traffic partitions the MDSU belongs in.

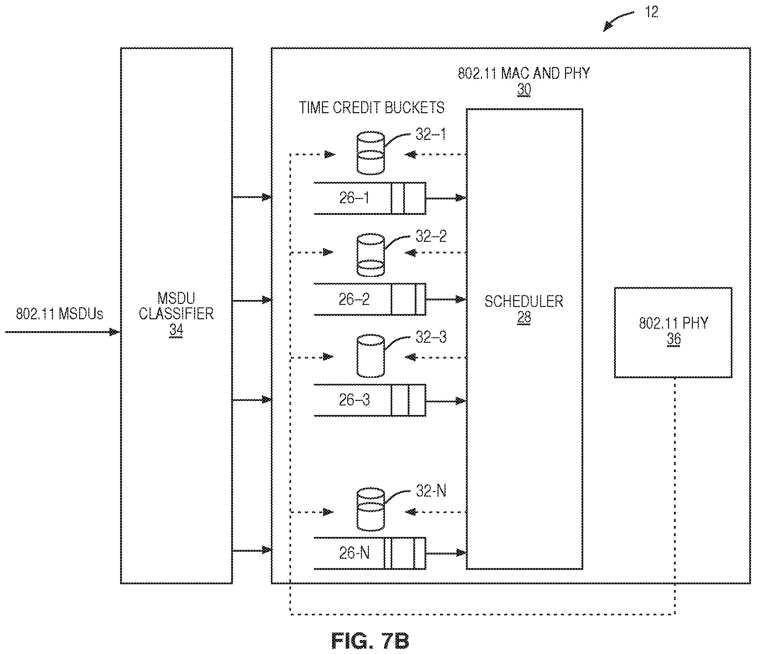

Figure 7B is a diagram of a wireless access point 12 for a WLAN with traffic partition queues 26-1 through 26-N and scheduler 28 included with the MAC and PHY layer 30 according to some embodiments of the present disclosure. These elements operate similarly to the elements in Figure 7A except that a IEEE 802.11 PHY layer 36 is now shown separately. As discussed above, incorporating the traffic partition queues 26-1 through 26-N and scheduler 28 with the MAC and PHY layer 30 may decrease communication time and lead to a more accurate implementation of the radio resource allocation policies.

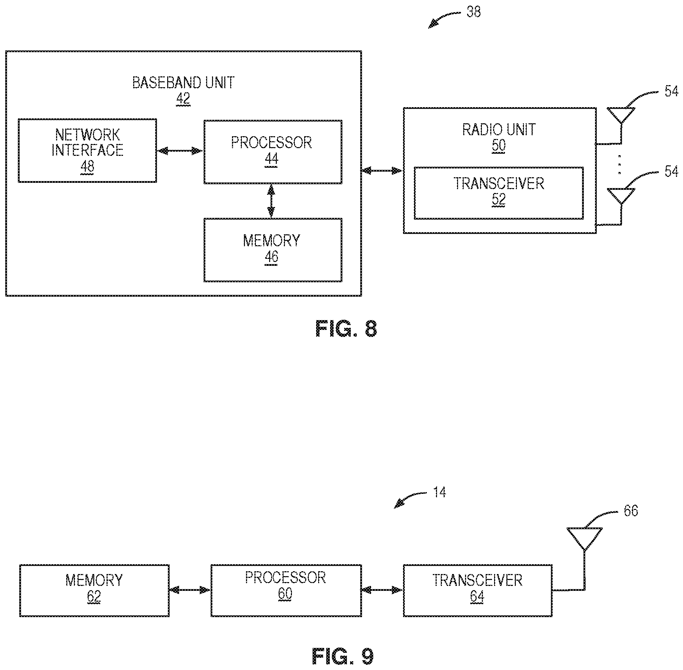

Figure 8 is a diagram of a network node 38 according to some embodiments of the present disclosure. As used herein, a network node 38 may be a wireless access point 12, an aggregate point 18, or any other suitable node such as a node in a core network. As illustrated, the network node 38 includes a baseband unit 42 including a processor 44, memory 46, network interface 48, and a radio unit 50 including a wireless transceiver 52 coupled to one or more antennas 54. In general, the network node 38 operates according to any of the embodiments described above. In one embodiment, the functionality of the network node 38 discussed above is implemented in software stored in the memory 46 that is executable by the processor 44 whereby the network node 38 operates according to any of the embodiments described above.

In one embodiment, a computer program including instructions which, when executed by at least one processor, causes the at least one processor to carry out the functionality of the network node 38 according to any one of the embodiments described herein is provided. In one embodiment, a carrier containing the aforementioned computer program product is provided. The carrier is one of an electronic signal, an optical signal, a radio signal, or a computer readable storage medium (e.g., a non-transitory computer readable medium such as the memory 46).

Figure 9 is a diagram of a wireless device 14 according to some embodiments of the present disclosure. As illustrated, the wireless device 14 includes a processor 60, memory 62, and a wireless transceiver 64 coupled to one or more antennas 66. In general, the wireless device 14 operates according to any of the embodiments described above. In one embodiment, the functionality of the wireless device 14 discussed above is implemented in software stored in the memory 62 that is executable by the processor 60 whereby the wireless device 14 operates according to any of the embodiments described above.

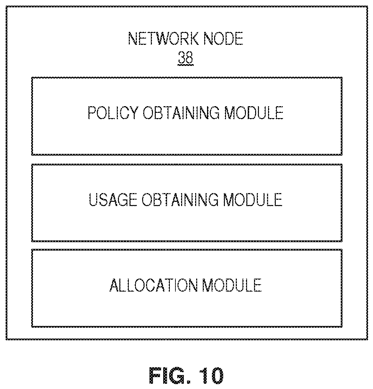

Figure 10 is a diagram of a network node 38 according to some embodiments of the present disclosure. As illustrated, the network node 38 includes a policy obtaining module 68, a usage obtaining module 70, and an allocation module 72, each of which is implemented in software that is executable by a processor to cause the network node 38 to operate according to any of the embodiments described above. In general, the policy obtaining module 68 operates to obtain radio resource allocation policies for two or more traffic partitions. The usage obtaining module 70 then operates to obtain radio resource usage for the two or more traffic partitions across multiple resource dimensions, as described above. The allocation module 72 operates to allocate radio resources to the two or more traffic partitions based on the radio resource usage of the two or more traffic partitions across the multiple resource dimensions and the radio resource allocation policies for the two or more traffic partitions.

The following acronyms are used throughout this disclosure.

- 3GPP — 3$^{rd}$ Generation Partnership
- 6LoWPAN — IPv6 over Low power Wireless Personal Area Network
- ACK — Acknowledgement
- AP — Access Point
- BSS — Basic Service Set
- BSSID — Basice Service Set Identifier
- BTC — Base Time Credit
- DECT — Digital Enhanced Cordless Telecommunication
- DIFS — Distributed Inter-Frame Space
- DL — Downlink
- DS — Distribution System
- ESS — Extended Service Set
- IEEE — Institute of Electrical and Electronics Engineers
- IETF — Internet Engineering Task Force
- LAA-LTE — License Assisted Access Long Term Evolution
- LTE — Long Term Evolution
- LTE-U — Long Term Evolution Unlicensed
- MAC — Media Access Control
- MIMO — Multiple-Input Multiple-Output
- MU-MIMO — Multiple-User Multiple-Output
- OTA — Over The Air
- PHY — Physical
- QoS — Quality of Service
- RAT — Radio Access Technology
- RF — Radio Frequency
- SIFS — Short Inter-Frame Space
- SSID — Service Set Identifier
- STA — Station
- UL — Uplink
- WLAN — Wireless Local Area Network

Those skilled in the art will recognize improvements and modifications to the embodiments of the present disclosure. All such improvements and modifications are considered within the scope of the claims that follow.

**Claims**

1. A method of operation of a network node (38) in a wireless communications network to allocate one or more radio resources to two or more traffic partitions comprising:

    obtaining (100) radio resource allocation policies for the two or more traffic partitions, wherein a traffic partition is defined to include one or more of transmissions having a similar Quality of Service, QoS, and/or transmissions using a predetermined service, and/or transmissions to/from a predetermined destination;
    obtaining (102) radio resource usage for the two or more traffic partitions across multiple resource dimensions, wherein the multiple resource dimensions comprise at least channel-time, radio frequency spectrum, spatial usage of media, and capability of at least two of the group consisting of:

    transmissions in a plurality of Multi-User Multiple-Input Multiple-Output, MU-MIMO;
    transmissions in a plurality of Radio Frequency, RF, channels; and
    transmissions in a plurality of wireless access points; and

    allocating (104) the one or more radio resources to the two or more traffic partitions based on the radio resource usage of the two or more traffic partitions across the multiple resource dimensions and the radio resource allocation policies for the two or more traffic partitions,
    wherein the one or more radio resources comprises at least channel-time, and wherein each of the two or more traffic partitions are associated with a percentage limit of the one or more radio resources included in the radio resource allocation policies.

2. The method of claim 1 wherein:

    - the plurality of wireless access points includes the network node; and obtaining the radio resource usage for the two or more traffic partitions in the plurality of wireless access points comprises operating the network node in promiscuous mode; or
    - the plurality of wireless access points includes the network node; and obtaining the radio resource usage for the two or more traffic partitions in the plurality of wireless access points comprises receiving the radio resource usage for the two or more traffic partitions from the plurality of wireless access points other than the network node.

3. The method of claim 1 wherein at least one of the plurality of wireless access points operates in another wireless communications network that is different than the wireless communications network of the network node.

4. The method of claim 3 wherein the other wireless communications network uses a different Radio Access Technology, RAT, that is different than a RAT used by the wireless communications network of the network node.

5. The method of claim 4 wherein the wireless communications network of the network node is a Wireless Local Area Network, WLAN, and the other wireless communications network is a Long Term Evolution, LTE, network.

6. The method of claim 1 wherein the network node is an aggregate point comprising a central scheduler (28) and a resource allocation unit.

7. The method of any of claims 1 through 5 wherein:

    - the network node is a wireless access point comprising a scheduler (28) that is separate from the Medium Access Control, MAC, and Physical, PHY, layers of the wireless access point; or
    - the network node is a wireless access point comprising a scheduler (28) that is integrated with the Medium Access Control, MAC, and Physical, PHY, layers of the wireless access point.

8. The method of claim 1, wherein:
    the multiple resource dimensions comprise both uplink and downlink transmissions.

9. The method of and one of claims 1 to 5, wherein:
    the multiple resource dimensions comprise transmissions in a plurality of wireless access points operating on the same Radio Frequency, RF, channel.

10. The method of any one of claims 1 to 5, wherein:
the step of allocating (104) comprises:

- for each transmission across the multiple resource dimensions, deducting (202) an amount of radio resources usage from a credit bucket of each of the two or more traffic partitions from corresponding radio resource credits, wherein radio resource credits are allocated according to the percentage limit of each traffic partition of the two or more traffic partitions;
- selecting (204, 208) the traffic partition of the two or more traffic partitions with the largest corresponding radio resource credit for the next transmission;
- if the traffic partition with the largest corresponding radio resource credit does not have any pending transmissions, setting (212) that radio resource credit to zero; and
- if each of the radio resource credits is at or below zero, setting (206) each radio resource credit equal to a predetermined base time credit multiplied by the percentage of the radio resource allocated to the corresponding traffic partition.

11. A computer-readable medium comprising code portions which, when executed on a processor, configure the processor to perform all steps of a method according to any one of the preceding method claims.

12. A network node (38) for use in a wireless communications network comprising:

at least one processor (44); and
a memory (46) coupled to the at least one processor, the memory containing instructions executable by the at least one processor whereby the network node is operative to:

- obtain radio resource allocation policies for one or more traffic partitions, wherein a traffic partition is defined to include one or more of transmissions having a similar Quality of Service, QoS, and/or transmissions using a predetermined service, and/or transmissions to/from a predetermined destination;
- obtain radio resource usage for the one or more traffic partitions across multiple resource dimensions, wherein the multiple resource dimensions comprise at least channel-time, radio frequency spectrum, spatial usage of media, and capability of at least two of the group consisting of:

transmissions in a plurality of Multi-User Multiple-Input Multiple-Output, MU-MIMO;
transmissions in a plurality of Radio Frequency, RF, channels; and
transmissions in a plurality of wireless access points; and

- allocate radio resources to the one or more traffic partitions based on the radio resource usage of the one or more traffic partitions across the multiple resource dimensions and the radio resource allocation policies for the one or more traffic partitions,

wherein the one or more radio resources comprises at least channel time, and wherein each of the two or more traffic partitions are associated with a percentage limit of the one or more radio resources included in the radio resource allocation policies.

13. The network node of claim 12 adapted to perform the method of any of claims 2 through 10.


**Patentansprüche**

1. Verfahren zum Betreiben eines Netzknotens (38) in einem drahtlosen Kommunikationsnetz, um eine oder mehrere Funkressourcen zwei oder mehreren Verkehrspartitionen zuzuweisen, umfassend:

Erhalten (100) von Funkressourcen-Zuweisungsrichtlinien für die zwei oder mehr Verkehrspartitionen, wobei eine Verkehrspartition so definiert ist, dass sie eine oder mehrere Übertragungen mit einer ähnlichen Dienstgüte, QoS, und/oder Übertragungen unter Verwendung eines vorbestimmten Dienstes und/oder Übertragungen zu/von einem vorbestimmten Zielort umfasst;
Erhalten (102) von Funkressourcennutzung für die zwei oder mehr Verkehrspartitionen über mehrere Ressourcendimensionen, wobei die mehreren Ressourcendimensionen mindestens eine Kanalzeit, ein Funkfrequenzspektrum, eine räumliche Nutzung von Medien und die Fähigkeit von mindestens zwei der Gruppe umfassen, die besteht aus:

Übertragungen in einer Mehrzahl von Multi-User Multiple-Input Multiple-Output, MU-MIMO;
Übertragungen in einer Mehrzahl von Funkfrequenz, RF, -Kanälen; und
Übertragungen in einer Mehrzahl von drahtlosen Zugangspunkten; und

Zuweisen (104) der einen oder mehreren Funkressourcen zu den zwei oder mehr Verkehrspartitionen basierend auf der Funkressourcennutzung der zwei oder mehr Verkehrspartitionen über die mehreren Ressourcendimensionen und den Funkressourcen-Zuweisungsrichtlinien für die zwei oder mehr Verkehrspartitionen, wobei die eine oder mehreren Funkressourcen mindestens eine Kanalzeit umfassen und wobei jede der zwei oder mehr Verkehrspartitionen einer prozentualen Begrenzung der einen oder den mehreren Funkressourcen, die in den Funkressourcen-Zuweisungsrichtlinien umfasst sind, zugeordnet ist.

2. Verfahren nach Anspruch 1, wobei:

- die Mehrzahl von drahtlosen Zugangspunkten den Netzknoten umfasst; und das Erhalten der Funkressourcennutzung für die zwei oder mehr Verkehrspartitionen in der Mehrzahl von drahtlosen Zugangspunkten das Betreiben des Netzknotens im Promiscuous-Modus umfasst; oder
- die Mehrzahl von drahtlosen Zugangspunkten den Netzknoten umfasst; und das Erhalten der Funkressourcennutzung für die zwei oder mehr Verkehrspartitionen in der Mehrzahl von drahtlosen Zugangspunkten das Empfangen der Funkressourcennutzung für die zwei oder mehr Verkehrspartitionen aus der Mehrzahl von anderen drahtlosen Zugangspunkten als dem Netzknoten umfasst.

3. Verfahren nach Anspruch 1, wobei mindestens einer aus der Mehrzahl von drahtlosen Zugangspunkten in einem anderen drahtlosen Kommunikationsnetz arbeitet, das sich von dem drahtlosen Kommunikationsnetz des Netzknotens unterscheidet.

4. Verfahren nach Anspruch 3, wobei das andere drahtlose Kommunikationsnetz eine andere Funkzugangstechnologie, RAT, verwendet, die sich von einer RAT unterscheidet, die von dem drahtlosen Kommunikationsnetz des Netzknotens verwendet wird.

5. Verfahren nach Anspruch 4, wobei das drahtlose Kommunikationsnetzwerk des Netzknotens ein drahtloses lokales Netzwerk, WLAN, ist und das andere drahtlose Kommunikationsnetzwerk ein Long-Term-Evolution, LTE, -Netzwerk ist.

6. Verfahren nach Anspruch 1, wobei der Netzknoten ein Aggregationspunkt ist, der einen zentralen Scheduler (28) und eine Ressourcenzuweisungseinheit umfasst.

7. Verfahren nach einem der Ansprüche 1 bis 5, wobei:

- der Netzknoten ein drahtloser Zugangspunkt ist, der einen Scheduler (28) umfasst, der von der Medium Access Control, MAC, und den physikalischen Schichten, PHY, des drahtlosen Zugangspunkts getrennt ist; oder
- der Netzknoten ein drahtloser Zugangspunkt ist, der einen Scheduler (28) umfasst, der in die Medium Access Control, MAC, und physikalischen Schichten, PHY, des drahtlosen Zugangspunkts integriert ist.

8. Verfahren nach Anspruch 1, wobei:
die mehreren Ressourcendimensionen sowohl Uplink- als auch Downlink-Übertragungen umfassen.

9. Verfahren nach einem der Ansprüche 1 bis 5, wobei:
die mehreren Ressourcendimensionen Übertragungen in einer Mehrzahl von drahtlosen Zugangspunkten umfassen, die auf demselben Funkfrequenz, RF, -Kanal arbeiten.

10. Verfahren nach einem der Ansprüche 1 bis 5, wobei:
der Schritt des Zuweisens (104) umfasst:

- für jede Übertragung über die mehreren Ressourcendimensionen, Abziehen (202) eines Betrags der Funkressourcennutzung aus einem Guthabenbereich von jedem der zwei oder mehr Verkehrspartitionen von entsprechenden Funkressourcenguthaben, wobei die Funkressourcenguthaben gemäß der prozentualen Begrenzung jeder Verkehrspartition der zwei oder mehr Verkehrspartitionen zugewiesen werden;

- Auswählen (204, 208) der Verkehrspartition der zwei oder mehr Verkehrspartitionen mit dem größten entsprechenden Funkressourcenguthaben für die nächste Übertragung;
- wenn die Verkehrspartition mit dem größten entsprechenden Funkressourcenguthaben keine anstehenden Übertragungen hat, Setzen (212) des Funkressourcenguthabens auf Null; und
- wenn jedes der Funkressourcenguthaben bei oder unter Null liegt, Setzen (206) jedes Funkressourcenguthabens so, dass es einem vorbestimmten Basiszeitguthaben multipliziert mit dem Prozentsatz der der entsprechenden Verkehrspartition zugewiesenen Funkressource gleichkommt.

**11.** Computerlesbares Medium, das Codeabschnitte umfasst, die, wenn sie auf einem Prozessor ausgeführt werden, den Prozessor dazu konfigurieren, alle Schritte eines Verfahrens nach einem der vorhergehenden Verfahrensansprüche auszuführen.

**12.** Netzknoten (38) zur Verwendung in einem drahtlosen Kommunikationsnetz, umfassend:

mindestens einen Prozessor (44); und

einen Speicher (46), der mit dem mindestens einen Prozessor gekoppelt ist, wobei der Speicher Anweisungen enthält, die von dem mindestens einen Prozessor ausgeführt werden können, wodurch der Netzknoten betriebsfähig ist, um:

- Funkressourcen-Zuweisungsrichtlinien für eine oder mehrere Verkehrspartitionen zu erhalten, wobei eine Verkehrspartition so definiert ist, dass sie eine oder mehrere Übertragungen mit einer ähnlichen Dienstgüte, QoS, und/oder Übertragungen unter Verwendung eines vorbestimmten Dienstes und/oder Übertragungen zu/von einem vorbestimmten Zielort umfasst;
- eine Funkressourcennutzung für die eine oder mehreren Verkehrspartitionen über mehrere Ressourcendimensionen zu erhalten, wobei die mehreren Ressourcendimensionen mindestens eine Kanalzeit, ein Funkfrequenzspektrum, eine räumliche Nutzung von Medien und die Fähigkeit von mindestens zwei der Gruppe umfassen, die besteht aus:

Übertragungen in einer Mehrzahl von Multi-User Multiple-Input Multiple-Output, MU-MIMO; Übertragungen in einer Mehrzahl von Funkfrequenz, RF, -Kanälen; und Übertragungen in einer Mehrzahl von drahtlosen Zugangspunkten; und

- Funkressourcen der einen oder den mehreren Verkehrspartitionen basierend auf der Funkressourcennutzung der einen oder der mehreren Verkehrspartitionen über die mehreren Ressourcendimensionen und den Funkressourcen-Zuweisungsrichtlinien für die eine oder die mehreren Verkehrspartitionen zuzuweisen,

wobei die eine oder mehreren Funkressourcen mindestens eine Kanalzeit umfassen und wobei jede der zwei oder mehreren Verkehrspartitionen einer prozentualen Begrenzung der einen oder der mehreren Funkressourcen, die in den Funkressourcen-Zuweisungsrichtlinien umfasst sind, zugeordnet ist.

**13.** Netzknoten nach Anspruch 12, der zum Durchführen des Verfahrens nach einem der Ansprüche 2 bis 10 geeignet ist.

## Revendications

**1.** Procédé de fonctionnement d'un nœud de réseau (38) dans un réseau de communication sans fil pour affecter une ou plusieurs ressources radio à au moins deux partitions de trafic comprenant :

obtenir (100) des politiques d'affectation de ressources radio pour les au moins deux partitions de trafic, une partition de trafic étant définie pour inclure un ou plusieurs parmi des transmissions ayant une Qualité de Service, QoS, similaire et/ou des transmissions utilisant un service prédéterminé et/ou des transmissions vers/depuis une destination prédéterminée ;

obtenir (102) une utilisation de ressources radio pour les au moins deux partitions de trafic sur de multiples dimensions de ressource, les multiples dimensions de ressource comprenant au moins un temps de canal, un spectre de fréquence radio, une utilisation spatiale de médias et une capacité d'au moins deux parmi le groupe consistant en :

des transmissions dans une pluralité d'Entrées Multiples, Sorties Multiples à Multiples Utilisateurs, MU-MIMO ;
des transmissions dans une pluralité de canaux Radiofréquence, RF, et
des transmissions dans une pluralité de points d'accès sans fil ; et

affecter (104) la ou les ressources radio aux au moins deux partitions de trafic sur la base de l'utilisation de ressources radio des au moins deux partitions de trafic sur les multiples dimensions de ressource et des politiques d'affectation de ressources radio pour les au moins deux partitions de trafic,
dans lequel la ou les ressources radio comprennent au moins un temps de canal, et dans lequel chacune des au moins deux partitions de trafic est associée à une limite de pourcentage de la ou des ressources radio incluses dans les politiques d'affectation de ressources radio.

2. Procédé selon la revendication 1, dans lequel :

- la pluralité de points d'accès sans fil comprend le nœud de réseau ; et l'obtention de l'utilisation de ressources radio pour les au moins deux partitions de trafic dans la pluralité de points d'accès sans fil comprend le fonctionnement du nœud de réseau dans un mode banalisé ; ou
- la pluralité de points d'accès sans fil comprend le nœud de réseau ; et l'obtention de l'utilisation de ressources radio pour les au moins deux partitions de trafic dans la pluralité de points d'accès sans fil comprend la réception de l'utilisation de ressources radio pour les au moins partitions de trafic à partir de la pluralité de points d'accès sans fil autres que le nœud de réseau.

3. Procédé selon la revendication 1, dans lequel au moins l'un de la pluralité de points d'accès sans fil fonctionne dans un autre réseau de communication sans fil qui est différent du réseau de communication sans fil du nœud de réseau.

4. Procédé selon la revendication 3, dans lequel l'autre réseau de communication sans fil utilise une Technologie d'Accès Radio, RAT, différente d'une RAT utilisée par le réseau de communication sans fil du nœud de réseau.

5. Procédé selon la revendication 4, dans lequel le réseau de communication sans fil du nœud de réseau est un Réseau Local Sans Fil, WLAN, et l'autre réseau de communication sans fil est un réseau d'Evolution à Long Terme, LTE.

6. Procédé selon la revendication 1, dans lequel le nœud de réseau est un point d'agrégation comprenant un ordonnanceur central (28) et une unité d'affectation de ressources.

7. Procédé selon l'une quelconque des revendications 1 à 5, dans lequel :

- le nœud de réseau est un point d'accès sans fil comprenant un ordonnanceur (28) qui est séparé des couches de Contrôle d'Accès au Support, MAC, et Physique, PHY, du point d'accès sans fil ; ou
- le nœud de réseau est un point d'accès sans fil comprenant un ordonnanceur (28) qui est intégré aux couches de Contrôle d'Accès au Support, MAC, et Physique, PHY, du point d'accès sans fil.

8. Procédé selon la revendication 1, dans lequel :
les multiples dimensions de ressource comprennent à la fois des transmissions en liaison montante et en liaison descendante.

9. Procédé selon l'une quelconque des revendications 1 à 5, dans lequel :
les multiples dimensions de ressource comprennent des transmissions dans une pluralité de points d'accès sans fil fonctionnant sur le même canal Radiofréquence, RF.

10. Procédé selon l'une quelconque des revendications 1 à 5, dans lequel :
l'étape d'affectation (104) comprend :

- pour chaque transmission sur les multiples dimensions de ressource, déduire (202) une quantité d'utilisation de ressources radio d'un compartiment de crédit de chacune des au moins deux partitions de trafic à partir de crédits de ressources radio correspondants, les crédits de ressources radio étant affectés selon la limite de pourcentage de chaque partition de trafic des au moins deux partitions de trafic ;
- sélectionner (204, 208) la partition de trafic des au moins deux partitions de trafic avec le plus grand crédit de ressources radio correspondant pour la transmission suivante ;
- si la partition de trafic avec le plus grand crédit de ressources radio correspondant n'a pas de transmission en attente, régler (212) ce crédit de ressources radio à zéro ; et
- si chacun des crédits de ressources radio est égal ou inférieur à zéro, régler (206) chaque crédit de ressources radio égal à un crédit de temps de base prédéterminé multiplié par le pourcentage de la ressource radio affectée à la partition de trafic correspondante.

11. Support lisible par ordinateur comprenant des parties de code qui, lorsqu'elles sont exécutées sur un processeur, configurent le processeur pour réaliser toutes les étapes d'un procédé selon l'une quelconque des revendications de procédé précédentes.

12. Noeud de réseau (38) destiné à être utilisé dans un réseau de communication sans fil comprenant :

au moins un processeur (44) ; et
une mémoire (46) couplée à l'au moins un processeur, la mémoire contenant des instructions exécutables par l'au moins un processeur, moyennant quoi le nœud de réseau est opérationnel pour :

- obtenir des politiques d'affectation de ressources radio pour une ou plusieurs partitions de trafic, une partition de trafic étant définie pour inclure un ou plusieurs parmi des transmissions ayant une Qualité de Service, QoS, similaire et/ou des transmissions utilisant un service prédéterminé et/ou des transmissions vers/depuis une destination prédéterminée ;
- obtenir une utilisation de ressources radio pour la ou les partitions de trafic sur de multiples dimensions de ressource, les multiples dimensions de ressource comprenant au moins un temps de canal, un spectre de fréquence radio, une utilisation spatiale de médias et une capacité d'au moins deux parmi le groupe consistant en :

des transmissions dans une pluralité d'Entrées Multiples, Sorties Multiples à Multiples Utilisateurs, MU-MIMO ;des transmissions dans une pluralité de canaux Radiofréquence, RF ; et
des transmissions dans une pluralité de points d'accès sans fil ; et

- affecter des ressources radio à la ou aux partitions de trafic sur la base de l'utilisation de ressources radio de la ou des partitions de trafic sur les multiples dimensions de ressource et des politiques d'affectation de ressources radio pour la ou les partitions de trafic,

dans lequel la ou les ressources radio comprennent au moins un temps de canal, et dans lequel chacune des au moins deux partitions de trafic est associée à une limite de pourcentage de la ou des ressources radio incluses dans les politiques d'affectation de ressources radio.

13. Noeud de réseau selon la revendication 12, conçu pour réaliser le procédé selon l'une quelconque des revendications 2 à 10.

TRAFFIC PARTITION 1 (30% OF CHANNEL TIME)

TRAFFIC PARTITION 2 ( 70% OF CHANNEL TIME)

FIG. 1

EP 3 304 989 B1

OBTAIN RADIO RESOURCE ALLOCATION POLICIES FOR A PLURALITY OF TRAFFIC PARTITIONS (E.G., TRAFFIC FOR ONE OR MORE WIRELESS DEVICES, CONFORMING TO A SPECIFIC CHARACTERISTIC, WITH A SIMILAR QOS, USING A PREDETERMINED SERVICE, AND/OR, TRAFFIC INCLUDING A PREDETERMINED DESTINATION) — 100

OBTAIN RADIO RESOURCE USAGE FOR THE PLURALITY OF TRAFFIC PARTITIONS ACROSS MULTIPLE DIMENSIONS (E.G., TRAFFIC ACROSS UL AND DL, MU-MIMO TRANSMISSIONS, ON MULTIPLE NETWORK CHANNELS, ON MULTIPLE ACCESS POINTS, AND/OR ON MULTIPLE RATS) — 102

ALLOCATE RADIO RESOURCES TO THE PLURALITY OF TRAFFIC PARTITIONS BASED ON THE RADIO RESOURCE USAGE FOR THE PLURALITY OF TRAFFIC PARTITIONS ACROSS THE MULTIPLE DIMENSIONS AND THE RADIO RESOURCE ALLOCATION POLICIES FOR THE PLURALITY OF TRAFFIC PARTITIONS — 104

**FIG. 2**

FIG. 3

10

NETWORK

PER RAT, PER AP (BASE STATION), PER TRAFFIC
PARTITION RESOURCE CONSUMPTION PROBES

PER RAT, PER AP (BASE STATION), PER TRAFFIC
PARTITION RESOURCE CONSUMPTION PROBES

PER RAT, PER AP (BASE STATION), PER TRAFFIC
PARTITION RESOURCE CONSUMPTION PROBES

PER RAT, PER AP (BASE STATION), PER TRAFFIC
PARTITION RESOURCE CONSUMPTION PROBES

AGGREGATE POINT
18

CENTRAL SCHEDULER/
RESOURCE ALLOCATION UNIT
22

NETWORK STATE
20

TRAFFIC PARTITION PROFILES
24

FIG. 4

**FIG. 5**

WIRELESS ACCESS POINT 12-N

WIRELESS ACCESS POINT 12-1

AGGREGATE POINT 18

300. OBTAIN RADIO RESOURCE ALLOCATION POLICIES FOR A PLURALITY OF TRAFFIC PARTITIONS

302-1 – 302-N. TRANSMIT RADIO RESOURCE ALLOCATION POLICIES

304-1 – 304-N. RADIO RESOURCE USAGE FOR THE PLURALITY OF TRAFFIC PARTITIONS

306A-1 – 306A-N. ALLOCATE THE RADIO RESOURCES TO THE PLURALITY OF TRAFFIC PARTITIONS

OR

306B-1 – 306B-N. UPDATE RADIO RESOURCE USAGE FOR THE PLURALITY OF TRAFFIC PARTITIONS FROM ALL WIRELESS ACCESS POINTS

308-1 – 308-N. ALLOCATE THE RADIO RESOURCES TO THE PLURALITY OF TRAFFIC PARTITIONS

FIG. 6A

20

FIG. 6B

EP 3 304 989 B1

FIG. 7A

FIG. 7B

38

BASEBAND UNIT
42

| NETWORK INTERFACE 48 | ↔ | PROCESSOR 44 |

MEMORY
46

54

RADIO UNIT
50

TRANSCEIVER
52

54

**FIG. 8**

14

66

| MEMORY 62 | ↔ | PROCESSOR 60 | ↔ | TRANSCEIVER 64 |

**FIG. 9**

NETWORK NODE
38

POLICY OBTAINING MODULE

USAGE OBTAINING MODULE

ALLOCATION MODULE

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014036893 A1
- WO 2013096563 A1
- EP 2472981 A1